# EUROPEAN PATENT APPLICATION

(11) **EP 4 614 414 A1**
(43) Date of publication of application: **10.09.2025**
(21) Application number: 25161746.0
(22) Date of filing: 05.03.2025
(51) Int. Cl.: G06Q 10/101, G06Q 50/18

(54) **COMPUTER-IMPLEMENTED METHOD AND SYSTEM FOR PROCESSING GROUP SUBMISSIONS OF CONSUMER COMPLAINTS**

(30) Priority: 05.03.2024 EP 24161414
(71) Applicant: Air Advisor SP. z o.o, 30-554 Krakow (PL)
(72) Inventor: RADCHENKO, Anton, Dubai (AE)
(74) Representative: Weisse, Moltmann & Willems PartGmbB

(57) **Abstract**

The present application relates to a computer-implemented method, system, and computer program product for managing collaborative submission processes, particularly group submissions of consumer complaints. A web-based platform hosted on a server device enables a first person to initiate a submission process, enter data, and upload documents via a client device. The first person can invite additional participants to contribute to the submission process, either by providing access links or by submitting data on their behalf. The server device facilitates communication between participants and the service provider, ensures continuous access to the submission process, and enables document review and processing.

## Description

### Technical field

The present invention relates to a computer-implemented method, a system and a computer program product for managing collaborative submission processes of consumer complaints.

### Background and prior art

Consumer complaints frequently originate from groups of affected individuals, including families, social networks, friends, colleagues, religious or ethnic groups, students, and sports teams. These complaints arise in various contexts across multiple industries.

For example, airline-related complaints include claims for flight compensation, reimbursement, refunds, and baggage issues (lost, damaged, delayed, incorrect charges). Legal complaints may involve breaches of contract or tort claims. General consumer complaints may target suppliers, manufacturers, and service providers (e.g., electronics, automobiles, gyms).

Other types of complaints and submissions may involve travel-related claims, insurance-related claims, and data breach compensation or reimbursement claims. Telecommunications-related complaints may arise in the context of family plans and other services. Employment-related claims, discrimination-related complaints, and medical or pharmaceutical-related claims are also common. Complaints may further extend to banking and financial services, logistics, education, and software-related submissions that do not necessarily pertain to disputes, claims, or consumer grievances but involve group submissions of various kinds.

Various service providers assist consumers in submitting complaints to relevant entities and, where necessary, enforcing these complaints. A typical example includes platforms that help enforce passenger rights against airlines for flight delays. These platforms require users to enter all relevant data related to their complaint through a web-based interface, allowing them to submit information and upload supporting documents.

However, existing submission systems are primarily designed for individual complaints. When multiple individuals within a group wish to file the same or a similar complaint, each person must submit their case separately. This results in a significant increase in workload, both for users and the system processing the complaints. Treating each submission as an independent case leads to redundant data storage, higher computational load, and increased resource consumption. In particular, this approach often causes unnecessary duplicate complaints or applications, as consumers intend to file a single group complaint or application within intake systems that are not tailored to serve this need effectively.

### Object of the invention

The object of the invention is therefore to eliminate the disadvantages of the prior art and to provide an improved method, a system and a computer program product for managing submission processes of consumer complaints, ensuring that fewer computer resources are required and that the submission process for a large group is less time-consuming, more user friendly and efficient.

### Disclosure of the invention

The object of the invention is solved by the features of the independent claims. Advantageous embodiments of the invention are described in the dependent claims.

In particular, the present application relates, in a first aspect, to a computer-implemented method for managing collaborative submission processes for solving the above object. Specifically, it enables the efficient handling of group submissions, including consumer complaints, claims, and other related submissions (hereinafter collectively referred to as "complaints").

Throughout the application text, the term "consumer" may be replaced with user where appropriate. The application is not exclusively limited to complaints from consumers but also encompasses complaints from other entities, individuals, or organizations, such as employment-related complaints and similar cases.

In general, a computer-implemented method in the sense of the application means preferably that at least one step of the method is executed by a computing system, such as a server device, client devices, or a web-based platform. However, the method may also include non-computer-based steps, such as manual verification, physical document handling, or personal communication between participants and service providers.

The method may begin with initiating a submission process via a web-based platform provided by a service provider and hosted on a server device. A first person assigned to a group may access the web-based platform through a client device, which is in data communication with the server device. In the next step, the first person may enter data and uploads documents related to a complaint via the client device, transmitting them to the server device. The first person may then invite a second and/or additional persons assigned to the group to participate in the submission process, selecting them based on stored contact information on the client device or through manual data entry.

The invited persons may receive an access link or other access information to the server device and submission process, provided either by the first person's client device or directly by the server device via IP-based communication. This allows them to connect via their client devices, upload documents, and contribute to the submission. Alternatively, the first person may enter data and upload documents on behalf of the invited persons, transmitting the information to the server device.

The method further may include communication between all participants and the service provider, including handling in-funnel information, action requests, and instant messaging, with all client devices interconnected via the server device or via Peer-to-Peer connection. The first person and the invited persons may have continuous access to the submission process until completion, allowing them to finalize their submissions by uploading additional documents, adding relevant information, sharing data, and electronically signing documents. The service provider may review and analyze the uploaded documents and data, either manually or automatically, and processes them accordingly. The status and progress of the submission process can be displayed on the client device of the first person and any invited persons upon request via their client device through the server device.

A key advantage of the proposed method is that it enables a collaborative submission process, allowing multiple participants to contribute or supplement data within a unified process. This not only reduces redundant data entry but also minimizes computational load, optimizes resource usage, and accelerates the overall submission process. The method efficiently processes and consolidates shared data, eliminating unnecessary duplication of stored information and reducing server-side processing demands.

In contrast, existing systems and methods primarily handle individual submissions and merely offer an option to invite others to submit separate applications. Current software solutions - whether web-based, app-based, in-chat, or otherwise - lack a dedicated and structured mechanism for processing group submissions efficiently.

As a result, multiple submissions are often generated, many of which contain redundant information. Additionally, some participants mistakenly assume that inviting others automatically integrates them into a shared submission. However, existing platforms treat such invited participants as prospective applicants rather than active contributors to the group submission. Consequently, these invited participants frequently fail to complete their applications correctly, leading to a high rate of incomplete or duplicate submissions. Since these submissions remain in an unprocessed lead status, they cannot be effectively handled, preventing the delivery of necessary services to the affected participants. Furthermore, this leads to unnecessary consumption of storage resources on the server device providing the platform. Additionally, maintaining database coherence and executing search, indexing, and information retrieval operations for multiple reactivation campaigns require significant compute power, as such applications typically remain incomplete for an extended period before being closed.

Generally, a submission process may refer to a procedure for submitting and processing a complaint or application within a digital system. This process can be identified by a sequential number or a unique identification number (Submission ID) to ensure clear assignment and tracking. It may consist of multiple phases, including data entry, document uploads, review, and final processing. Preferably, all data and documents associated with a submission process are stored in a database according to the assigned identification number. This database can, for example, be provided by the server device.

A web-based platform preferably refers to a digital system accessible via a web browser, operating on a server infrastructure such as the proposed server device. It enables users to interact with its functionalities without requiring local installation. It may provide a structured environment for performing specific tasks, such as data entry, document uploads, communication, and process management. The platform is preferably hosted on a remote server device or cloud infrastructure, ensuring availability across different devices and locations.

Further, a service provider according to the application preferably refers to a party that offers digital services, infrastructure, or functionalities to users or individuals assigned to a group through a system, platform, or network. In the context of a web-based platform, the service provider may be responsible for hosting, maintaining, and managing the platform, ensuring its availability, security, and performance. Additionally, the service provider facilitates the submission process by requesting relevant information and necessary documents from users, guiding them through required steps, and verifying data completeness. It may also act on behalf of users by submitting complaints to the relevant entities or organizations against which the complaint is directed and, when necessary, initiating legal proceedings to enforce user rights.

In general, a server device may refer to a computing system that provides services, processes data, and manages communication within a networked environment. Within the meaning of this application, a server device may also refer to a server infrastructure comprising multiple interconnected computers or computing systems. The server device may comprise at least one data processing unit, which includes at least one processor for executing instructions and a memory for storing data, applications, and system processes. Additionally, the server device may include a communication unit, enabling data exchange with client devices and other network components through wired or wireless connections.

A client device preferably refers to a computing device used by a user (such as the first, second, or additional person) to access a web-based platform and interact with its functionalities. The client device can establish a network connection to the web-based platform, enabling users to enter data, upload documents, and communicate within a submission process. Moreover, the client device preferably comprises a communication unit, a data processing unit with at least one processor, and a memory for storing relevant data and application processes. It may, for example, be a smartphone, tablet, laptop, or desktop computer, but is not limited to these examples. The client device may be in data communication with the server device, which processes requests, manages stored data, and facilitates interactions between multiple client devices, with the server device hosting the web-based platform. The server device ensures real-time access, secure data transmission, and overall system functionality, while the client device serves as the user interface for interacting with the platform. Accordingly, the client device preferably includes input components, such as buttons, cameras or a touch display, as well as output component, such as a display screen.

Communication between the client device and the server device is preferably based on IP-based protocols, enabling data exchange through a web-based interface using suitable technologies such as email, HTTP, HTTPS, WebSockets, or other communication protocols. These technologies ensure secure and efficient data transmission between the client device and the server infrastructure.

The communication architecture may involve direct interactions between each client device and the server device, where the server acts as an intermediary for data exchange, request processing, and real-time updates. This setup ensures centralized control, consistent data management, and security enforcement.

Alternatively, communication between client devices may also occur via peer-to-peer (P2P) connections. In such cases, the server device may establish and authenticate the connection before allowing direct communication between client devices.

Within this application, a group may refer to a collection of individuals who interact, share a common identity or purpose, or are associated with a common process or activity. A first person assigned to the group is any designated member. A second person is an additional member of the group, while additional persons are any further participants beyond the second person.

The first person is equivalent to a main applicant, whereas the second person and additional persons correspond to fellow applicants within the submission process.

As already stated above, the method enables the selection and invitation of additional persons to the submission process based on stored contact information on the client device. This allows the first person to efficiently identify and invite relevant persons without requiring manual data entry for each additional person. The stored contact information may include names, email addresses, phone numbers, or other identifying details previously saved on the client device. By leveraging this data, the platform streamlines the invitation process, reducing the time and effort needed to initiate a collaborative submission. Additionally, automated suggestions or filtering mechanisms can be implemented to assist persons in selecting the most relevant contacts, ensuring a more seamless and efficient complaint submission process.

If stored contact information is not available or incomplete, the method allows a person to manually enter the necessary details on the client device. This ensures flexibility in the invitation process. Manual data entry can include inputting names, email addresses, phone numbers, or other relevant identifiers required for participation in the submission process. This approach provides greater adaptability, allowing persons to invite other persons regardless of whether their contact information is pre-saved.

To facilitate seamless participation in the submission process, a person's client device and/or the server device can generate an access link or other access information, allowing invited persons to securely connect to the server device and contribute to the complaint submission. This access link or information can be delivered via email, SMS, in-app notifications, or other communication channels, ensuring that participants can conveniently join the process from their client devices.

The access link particularly includes connection information to the server device, as for example the IP address.

The connection details, including the invited persons' email addresses or phone numbers, are preferably provided by the first person through their client device. These details may enable the server device to generate and transmit personalized access credentials to the invited participants, ensuring a secure and structured invitation process.

Alternatively, if invited persons are unable or unwilling to submit their own information, the inviting person, particularly the first person, may enter the required data and upload documents on their behalf. This ensures that all necessary information is included in the submission without requiring direct interaction from each participant. This flexibility enhances accessibility and streamlines the collaborative submission process.

The method facilitates seamless communication between the first person, the second and/or additional persons, and the service provider, preferably by enabling real-time data exchange and interaction through the server device or via peer-to-peer connection. This includes processing in-funnel information, handling action requests, and facilitating instant messaging. By interconnecting all client devices via the server device, the method ensures that information is synchronized, improving collaboration, efficiency, and transparency throughout the submission process.

In-funnel information particularly refers to data and interactions that occur within the structured process of submitting a complaint. This includes information that is actively processed and exchanged during the various stages of the submission workflow, such as user-provided data. The method ensures that relevant information is captured, updated, and displayed in real time as part of the structured complaint intake and processing sequence. To optimize efficiency, the method enables collaborative submission workflows, allowing the first person to invite the second and/or additional persons who can concurrently or sequentially contribute to the submission.

The method supports collaborative and structured participation, enabling the first person and the second and/or additional persons to complete submission tasks together or independently, including document uploads, data entry, and electronic signing. Action requests and real-time updates ensure that necessary information is efficiently requested, processed, and exchanged. The method may further incorporate multi-channel notifications, including SMS, email, messengers, or social media, to inform participants about submission progress and allow them to resume incomplete submissions at a later stage.

Beyond the intake process, the method may integrate a personal cabinet that allows the first person and the second and/or additional persons to track submission status and access pending tasks. The personal cabinet interface ensures transparency by providing a structured overview of all submissions within a group, preventing confusion and allowing participants to verify their own and others' progress. Additionally, the method may support adaptive intake refinement, dynamically triggering additional selections, requests, or interface modifications based on user responses. This allows for personalized inputs from the first, second and/or additional persons while maintaining consistency across shared elements of the submission.

In a preferred embodiment, the proposed method further comprises informing the second and/or additional persons about updates or completion actions performed by the first person and enabling them to report any suspicious or unauthorized activity through an automatic communication process for verification, fraud prevention, risk mitigation, and analytical evaluation.

In this respect, the server device may transmit notifications to the respective client devices of the second and/or additional persons. These notifications can be delivered via multiple communication channels, such as push notifications, emails, SMS, or in-app alerts, ensuring that participants receive timely updates. Upon receiving a notification, the respective participant can access the web-based platform via their client device to review the updates. The server device or web-based platform may provide a structured update log or dashboard, allowing participants to track changes, view relevant actions taken by the first person, and acknowledge or respond to critical updates.

Preferably, the method ensures that the first person, as well as the second and/or additional persons, have continuous access to the submission process until its completion. This allows all participants to finalize their submissions at their own pace by uploading necessary documents, adding relevant information, sharing data, and electronically signing documents as required. The web-based platform may remain accessible via client devices, enabling participants to review, update, or supplement their submissions as needed. This continuous accessibility ensures a collaborative and transparent process, reducing errors, minimizing delays, and enhancing the overall efficiency of handling group complaints. Additionally, automated notifications or reminders can be sent to participants by the server device to prompt them to complete any outstanding tasks, ensuring a timely and well-organized submission.

The service provider may review and analyze all uploaded documents and data stored on the server device, either manually or automatically, to ensure the accuracy and completeness of the submission.

For example, in an airline compensation claim, the proposed method may include a method step of automatically extract flight details from boarding passes and e-tickets, cross-checks delay or cancellation records, and determines eligibility based on predefined legal rules. If inconsistencies are detected, the method may flag the submission for manual review by an agent of the service provider.

Similarly, in an insurance claim, the method may include a step of scanning policy documents and medical reports, for example, using Optical Character Recognition (OCR) to verify coverage terms and detect potential fraud risks.

In the case of a consumer product complaint, the method may involve receipt verification to determine whether the product qualifies for a return or refund under the applicable policy. Once the review is complete, the method processes the submission accordingly, either forwarding it to the responsible entity or providing feedback to the applicants or relevant persons regarding any missing or incorrect information.

As previously mentioned, the method may provide real-time status tracking for the submission process, ensuring transparency and continuous accessibility for all involved participants. The status and progress of the submission can be displayed on the client device of the first person and any invited persons upon request via their client device through the server device. The status may dynamically change throughout different phases of the process.

For example, the status may initially be set to "submitted" once the submission is completed. When the service provider begins analyzing the documents and data, it may update to "under review." If any information is missing or incorrect, the status may change to "additional information required," prompting the applicants to provide corrections or upload additional documents. Once all necessary data has been received, the status may advance to "processing," indicating that the submission is actively being handled, which may include external communication with relevant entities. When a final decision is reached, the status may update to "resolved," signifying that the complaint has preferably been successfully processed, rejected, or forwarded for further action.

In a further preferred embodiment, the method comprises the method step of assigning a first person the role of a lead applicant, guardian, or application supervisor for the submission process, wherein the role assignment is managed via the web-based platform hosted on the server device. Additionally or alternatively, the first person may designate another invited person or an external authorized controller as a lead applicant, guardian, or application supervisor via role selection functionalities provided by the server device.

This embodiment enhances the structure and efficiency of group submissions by enabling clear role assignment. It reduces duplicate or incomplete submissions, improves accessibility for users requiring assistance, and enhances security through controlled role management. Additionally, it facilitates coordination and tracking of the submission process via a centrally managed digital platform.

For example, in a family filing a group compensation claim for a canceled flight, one member can be assigned as the lead applicant to manage the submission, upload documents, and track progress on behalf of others. This prevents each family member from having to submit separate claims, reducing redundant data entry and ensuring a more efficient and organized process.

Additionally, the method may allow the lead applicant to share this role with multiple co-lead applicants. To facilitate progress and coordination within the group submission process, the method may further comprise providing a secure personal cabinet environment with group chat functionality
A personal cabinet is a secure, user-specific digital workspace within the web-based platform that allows participants to manage, track, and complete their group submissions. It provides features such as document storage, status tracking, role management, and group communication, including a chat function for coordination among applicants.

The personal cabinet may provide a secure and compliant environment for the completion of information and documents by the first person for themselves and the second and/or more additional persons, and by the second and/or more additional persons for themselves and other additional persons. It also allows for concurrent and/or sequential collaboration on submissions, including completion actions undertaken by the first person and additional persons, or by two or more additional persons assisting one another.

In a further preferred embodiment, the method may comprise summarizing factual information provided by the first person and sharing it with the second and/or additional persons via the server device. This measure reduces redundant data entry and ensures consistency by automatically summarizing and sharing key information, allowing all participants to contribute efficiently without repeatedly entering the same details.

For example, if a group of travelers submits a compensation claim for a delayed flight, the first person can enter details such as the flight number, delay duration, and airline response, which are then automatically shared with the other travelers, preventing each member from having to input the same information manually.

Moreover, the method may include anonymizing and automatically suggesting relevant fact summaries to individuals who have encountered similar issues. This can be beneficial in two ways: first, within a group submission where members may not know each other well and prefer not to disclose all their personal details to one another; and second, for individuals outside the group who are submitting a separate complaint but are facing the same issue, where personal data should also not be shared. This feature enhances efficiency and user experience by reducing redundant data entry, ensuring consistency across submissions, and maintaining privacy while still providing relevant contextual information.

For example, if a person describes their experience with a travel disruption or unauthorized bank charges, this information can be summarized, anonymized, and suggested to other participants within the same group submission. Additionally, it can be provided to unrelated individuals dealing with similar complaints, eliminating the need for each person to repeatedly enter identical details.

Considering a family trip cancellation where one member submits a group claim on behalf of all travelers under the same booking. This person may provide key details such as the reason for the airline's cancellation, when passengers were informed, and whether the airline provided accommodations, transportation, or other necessary services. The method ensures that other family members do not need to re-enter the same information, as it is shared within the group.

Furthermore, anonymized fact summaries can be suggested to individuals outside the group who experienced the same issue on the same flight and date. This reduces the effort required for submission and minimizes IT workload by eliminating unnecessary duplication of information.

In a further preferred embodiment, the method preferably comprises the method step of processing the data and documents submitted by the first person and/or invited persons on the server device to classify and quantify potential outcomes and forms of relief using predefined classification rules and data analysis algorithms. It further includes automatically estimating the time required to obtain a result based on the provided data, historical records stored on the server device, and predefined estimation models.

The classification and quantification process involves preferably identifying and categorizing essential facts to determine legal elements relevant to the complaint, classify claims based on predefined categorization rules, assess eligibility criteria, identify defense arguments that may partially or fully invalidate the submission, and quantify potential relief types and estimated recovery amounts. By analyzing the information provided, the method can classify and quantifiy possible outcomes and the relief that may be granted.

For example, the method can determine whether extraordinary circumstances exist that would invalidate a submission. Such a determination may be suggested for manual verification by a manager or agent of a service provider or automatically confirmed using APIs or internal resources. If a complaint is classified accordingly, the method can notify other participants facing the same issue, reducing processing and wait times.

The method can also identify facts indicating egregious or willful misconduct. This enables a more precise quantification of potential damages based on various assessment factors. The classification of such cases and the estimated damages can be attributed to other group members' claims or to unrelated individuals exposed to the same circumstances but unable to provide sufficient details due to a lack of knowledge, time, or other constraints.

Predefined classification rules may refer to structured criteria or logic sets that the method uses to categorize submitted complaints, determine eligibility, and assess potential outcomes. These rules can be established based on legal regulations, industry standards, or historical case data, allowing the system to automate decision-making and ensure consistent classification of submissions.

For example, in an airline compensation claim, predefined classification rules may include checking whether the delay exceeds a legally required threshold (e.g., three hours) and whether the airline can invoke extraordinary circumstances as a defense.

Data analysis algorithms may refer to computational methods used to process, evaluate, and extract meaningful insights from submitted data and documents. These algorithms apply preferably statistical models, pattern recognition, and machine learning techniques to classify cases, quantify potential outcomes, and detect inconsistencies or missing information.

On the other hand, estimation models may refer to computational frameworks that predict the expected time, likelihood of success, or potential compensation based on predefined criteria and historical data. While estimation models focus on forecasting outcomes, they can also be considered a specialized subset of data analysis algorithms, as they rely on similar techniques such as statistical analysis, trend evaluation, and machine learning.

Furthermore, the method may automatically showcase potential outcomes, success rates, and estimated resolution times based on historical data, integrating this key information into the personal cabinet on the platform, which is preferably accessible via client devices. This improves transparency and predictability, motivating users to finalize incomplete applications by providing a clear assessment of their chances of success. Showcasing success probability, estimated compensation, and expected payout time in the personal cabinet serves as a strong incentive for applicants to complete their pending submissions.

The proposed method may also include the step of verifying the value of reimbursement claims based on estimates of the fair market price for specific items or services. This allows applicants or a person to conveniently rely on auto-suggested valuations, such as the estimated worth of a lost baggage item and its contents when receipts are no longer available.

In a further preferred embodiment, the method may include validating access and submissions by implementing a security process that incorporates multiple validation methods, risk mitigation measures, analytical evaluation, and the consensual sharing of information and data, wherein the first person and the second and/or more additional persons are enabled to securely upload and provide nonpublic documents and information. For example, in an airline compensation claim, the method may require multi-factor authentication and encrypted document uploads to verify the applicant's identity and prevent fraudulent submissions.

Additionally, the method may comprise recording attributes of the first person and the second and/or more additional persons for verification, fraud prevention, risk mitigation, and analytical evaluation, wherein the recorded attributes preferably include timestamps, user IP addresses, and additional identifying characteristics such as device type and model. For example, in an online group submission for a reimbursement claim, the method can log timestamps and IP addresses to identify potential inconsistencies, such as multiple submissions from different locations within a short timeframe, which may indicate fraudulent behavior.

A key challenge in existing software solutions is ensuring the security of access and submissions. To address this, the method preferably operates in a secure and compliant environment using a combination of validation methods that incorporate private information, restricted access controls, and multi-layered authentication. These may include validation via email, SMS, or messenger services, controlled sharing of information with the second and/or additional persons, and the ability to upload secured nonpublic documents.

For example, in flight compensation claims, validation or verification may rely on a combination of credentials such as e-tickets, boarding passes, flight reservations, or unique tracking numbers issued by airlines, insurers, loss adjusters, or legal representatives, ensuring that only authorized individuals can submit a claim. In financial claims, validation or verification may involve banking details such as account numbers, transaction records, bank statements, or institution-generated tracking numbers, restricting access to legitimate account holders. Similarly, insurance claims may require authenticated submission of policy documents, insurance certificates, claim numbers, or other identifiers issued by insurers or adjusters.

Additionally, highly sensitive personal documents, such as passports, driving licenses, or identification cards, may be uploaded when necessary to strengthen validation or verification. The ability of a lead applicant and/or by co-applicants to provide such documents enhances the security score of the submission.

To further ensure authenticity, the method may support electronic signing of claim assignments, powers of attorney, or similar documents. This can be performed directly by the first person and the second and/or more additional persons via a secure link on their client device or through the protected environment of the lead applicant's personal cabinet. Signature verification may be conducted via email, SMS, or other protocols, including automated comparison against identification documents.

All actions of the first person and the second and/or more additional persons, including timestamps, IP addresses, and submission logs, may be recorded to maintain an audit trail. By classifying these security-related actions, the method may determine a security score that assesses the legitimacy of submissions and ensures compliance with verification standards.

In a further preferred embodiment, the proposed method may further comprise the step of automatically identifying, removing, and/or anonymizing sensitive and personally identifiable information from complaints and reviews before publication, wherein the processing is performed on the server device.

Complaints may be published on consumer rights websites, social media platforms, or industry-specific portals to inform the public about recurring issues while complying with data protection regulations. For example, a complaint about repeated airline cancellations may be anonymized and shared as a case summary, highlighting affected routes and compensation eligibility. Users may control publication settings, choosing between public, restricted, or private submission. This ensures transparency, enhances consumer advocacy, and protects individual privacy while maintaining regulatory compliance.

Additionally, the method enables both manual moderation and automated processing for complaint publication, allowing for moderator review, automatic filtering, and/or direct posting via the server device on designated online platforms. Users, including the first, second, and any additional persons, can submit complaints against organizations, provide detailed reviews, and request publication on websites or structured social media posts, with the option to generate an auto-suggested draft for efficiency. Furthermore, the method may capture, summarize, and store responses from organizations, including resolutions, compensation offers, or public statements, enabling comprehensive tracking of consumer-business interactions.

The method may further allow users - including the first, second, and any additional persons- to specify the type of relief sought, displaying the probability of approval based on predefined categories or user-defined inputs. Available relief options may include refunds, contract cancellations, vouchers, loyalty points, gift cards, in-kind benefits, free services, or replacements, either as an alternative or supplement to the primary request. By integrating these capabilities, the method fosters a community of users who share verified experiences, providing valuable insights into organizational practices. These insights enhance consumer awareness and can serve as the basis for a proprietary trust or quality score for businesses.

Additionally, the method may allow for the aggregation and analysis of user-submitted complaints and reviews to generate a trust or quality score for specific products or services, enabling targeted public sentiment analysis. For example, a passenger may not only file a complaint but also submit a review assessing airline service quality, punctuality, food, dispute handling, and overall treatment. Aggregated data can identify recurring patterns, such as frequent delays by a particular airline at a specific airport during certain periods, or widespread issues like inadequate lounge access, poor airport facilities, and subpar customer service. Such information is significantly more valuable than generic reviews or complaint statistics, offering data-driven recommendations for travel planning, airline selection, route decisions, and travel insurance considerations.

The method further may include capturing and storing organizations' responses to complaints and reviews, including resolution offers and settlement proposals. Additionally, it may provide chargeback functionality, enabling consumers to initiate financial disputes. It also may allow designated access for organizations, providing visibility and control over complaints, applications, and reviews, enabling proactive management of negative user experiences through automated, semi-automated, or manual actions. Businesses may implement workflows to compensate affected users through refunds, vouchers, bank payouts, e-wallet credits, e-gift cards, or cryptocurrency and request applicants to update or revise complaints or reviews upon resolution, including the option to e-sign release agreements.

In a further preferred embodiment, the method includes identifying and prioritizing the handling of complaints submitted by high-priority individuals, such as those with elevated service status, frequent users, premium service members, or designated priority clients. The prioritization process is carried out on the web-based platform to accelerate resolution, improve user experience, and enhance customer loyalty and satisfaction. Additionally, computational resources are optimized by dynamically allocating processing power and server bandwidth to high-priority cases, reducing system load and improving overall platform efficiency.

In other words, the method preferably enables the identification and prioritization of high-value applicants, such as frequent travelers, business and first-class passengers, veterans, platinum or gold loyalty members, and, in banking contexts, elite status credit card holders, large account holders, or VIP clients. This allows organizations to efficiently address their concerns, restore loyalty, and offer tailored settlements. For instance, a platinum-status business-class passenger who is downgraded to economy and loses luggage presents a high-priority case that an airline would likely seek to resolve quickly and privately. Similarly, an organization may aim to discreetly settle an employment discrimination complaint involving a known professional before formal legal action is initiated.

In a further preferred embodiment, the method may track communications through internal systems and various APIs, including electronic message tracking (e.g., open rate, click rate, and completion rate), while recording relevant statistics and performance indicators.

The method may track communication between the server device and the first person, the second and/or additional persons, including providing status updates, reminders, and confirmations related to the submission process. Additionally, the server device may facilitate communication with external entities, including legal service providers, financial institutions, and businesses, to verify, process, or respond to complaints. The server device may further track communication between internal systems, including analyzing user activity, monitoring security events, and optimizing decision-making based on communication metrics such as open rates, click rates, and completion rates.

In a further preferred embodiment, the method may perform A/B testing of different communication strategies in an automatic and/or semi-automatic manner, including variations in templates, timing, combinations of messaging channels (email, SMS, messengers, etc.), geographic dependencies, and different reminder workflows for the first person and/or the second and additional persons to optimize communication efficiency.

In a further preferred embodiment, communications to the first person and the second and/or additional persons may include secure links enabling the completion of any incomplete submissions for both the first person and the second and/or additional persons. These communications may comprise secure links directing users either to the specific abandoned step within the incomplete submission process, allowing them to resume and complete it, or to their personal cabinet, providing a secure and convenient environment for finalizing the submission on the platform.

The proposed method may further comprise the step of enabling the first, the second and any additional person to preview not only the status and progress of their submission but also any missing documents or information, allowing them to better understand the necessary inputs.

Moreover, the method may prompt automatic communications to inform the first person, the second person, and any additional persons about updates or completion actions performed by the first person, allowing the second and/or additional persons to stay informed and take necessary actions within the submission process.

The method may further comprise enabling the second and/or additional persons to report any suspicious or unauthorized activity if they consider such conditions to arise by clicking a button or link within the communication (e.g., an in-email "report fraud" button or a link in an SMS or messenger message). Upon receiving such a report, the method will automatically notify the assigned manager and supervisor responsible for the submission, ensuring that proper investigation and preservation efforts can be initiated promptly. The method may generate draft messages based on pre-configured templates, allowing the reporting person to provide relevant information in a structured format similar to a questionnaire, including details of the incident and any related requests.

Additionally, the proposed method may record timestamps, IP addresses, and other identifying information whenever feasible, comparing the recorded IP address with the one used during the initial application submission. Once completed, such messages may be sent via email, SMS, or messengers and recorded within the secure chat of the reporting person's personal cabinet, allowing the assigned manager to assess the situation and take appropriate action. The method may further save and track the progress of the report, ensuring that the status remains visible within the reporting person's personal cabinet. This feature is particularly important for preventing further activity on a compromised submission, halting any pending payouts if necessary, and providing relevant authorities with critical information should a formal investigation be required.

In a further preferred embodiment, the method may store the progress of a submission process on the server device, allowing the first person, the second person, and any additional persons to resume and complete the submission at a later time.

The application relates, in a second aspect, to a system for managing collaborative submission processes, particularly group submissions of consumer complaints, claims, or other submissions, collectively referred to as "complaints." The system is preferably configured to execute the method as proposed in any of the described embodiments.

The system may comprise a server device hosted by a service provider, a first client device assigned to a first person of a group, a second client device assigned to a second person of the group, and/or an additional client device assigned to an additional person of the group.

The server device is preferably configured to provide a web-based platform for initiating, managing, and processing submission processes and to store data and uploaded documents received from the first client device and/or the second or additional client devices. It preferably transmits access information, including an access link, to the second and/or additional persons upon request from the first client device and facilitates communication between the first client device, the second client device, and/or additional client devices, as well as the service provider, including handling in-funnel information, action requests, and instant messaging. Furthermore, the server device can provide continuous access to the submission process for all involved persons until completion and enables the service provider to review and process submitted data and documents, either manually or automatically.

The first client device is preferably configured to initiate a submission process by connecting to the server device and accessing the web-based platform, as well as entering data and uploading documents related to the complaint and transmitting them to the server device. It may enable the invitation of the second and/or additional persons to participate in the submission process by sending a request to the server device to generate and transmit an access link. Additionally, the first client device may optionally enter data and upload documents on behalf of the second and/or additional persons and transmit them to the server device. It further facilitates communication with the second person and/or the service provider via the server device and displays the status and progress of the submission process as received from the server device.

The second client device and/or additional client device is preferably configured to access the submission process via the server device using the received access link, enter data and upload documents related to the complaint, and transmit them to the server device. Additionally, it displays the status and progress of the submission process as received from the server device.

The skilled person will recognize that the advantages, technical effects and preferred embodiments discussed in connection with the method for managing collaborative submission processes apply analogously to the system for managing collaborative submission processes. It is also apparent that all described embodiments of the method can be correspondingly formulated in an analogous manner within the system.

In a further preferred embodiment, the system may comprise one or more processors operatively connected to a memory, configured to execute and manage a plurality of system components, including an interactive user interface module (funnel) and a personal cabinet module. These components are preferably configured to display the funnel interface, generate and preview communications, process updates, execute functions, handle information requests, perform validations, and record relevant data.

The system may further include mechanisms for workload balancing and request queuing to prevent system overload or failure. Additionally, it may be configured to integrate with CDN (Content Delivery Network) technology providers to ensure fast processing times and optimized loading and delivery of results for the first person and the second and/or additional persons. Furthermore, the system can be adapted to prioritize urgent or critical communications to the second and/or additional persons, particularly in scenarios where system resources are under high demand, ensuring expedited processing of time-sensitive requests, such as reports of suspicious activity submitted by a fellow applicant.

In a third aspect, the application relates to a computer program product comprising instructions that, when executed on a server device hosted by a service provider, enable the server device to execute a method for managing collaborative submission processes.

The method may provide a web-based platform for initiating, managing, and processing submission processes. It further may comprise storing data and uploaded documents received from a first client device and/or a second or additional client device, transmitting access information, including an access link, to the second and/or additional persons upon request from the first client device, and facilitating communication between the first client device, the second client device and/or additional client devices, and the service provider, including handling in-funnel information, action requests, and instant messaging. Moreover, it may ensure continuous access to the submission process for all involved persons until completion and may enable the service provider to review and process submitted data and documents, either manually or automatically.

A key advantage of such a computer program product is that it automates and streamlines the handling of group submissions, reducing the manual effort required for both users and service providers. By integrating structured data processing, automated validation, and efficient communication management, the program enhances the accuracy and consistency of submissions while minimizing redundant data entry. Additionally, it ensures scalability, allowing the system to handle high volumes of complaints without compromising performance. The ability to facilitate real-time collaboration among multiple participants further improves efficiency and user experience, making the submission process more transparent and accessible. Moreover, the structured workflow and role-based access management contribute to greater security and compliance, particularly in regulatory-sensitive environments.

Further examples of embodiments are explained in more detail below with reference to the accompanying drawings. The invention is not intended to be limited solely to these listed examples of embodiments. They merely serve to explain the invention in more detail. The present invention is intended to relate to all objects which the person skilled in the art would use now and, in the future, as obvious to realize the invention.

### Brief description of the figures

- **Fig. 1**: shows a flow chart of a preferred embodiment of the proposed method.
- **Fig. 2**: shows an embodiment of the preferred system based on a client-server model.
- **Fig. 3**: shows a chart depicting a preferred embodiment of the proposed computer-implemented method in an alternative formulation.
- **Fig. 4**: shows a schematic representation of a preferred embodiment of the proposed system in an alternative formulation.
- **Fig. 5**: shows a chart depicting a further preferred embodiment of the proposed computer-implemented method in an alternative formulation.
- **Fig. 6**: shows a chart depicting a further preferred embodiment of the proposed computer-implemented method in an alternative formulation.

### Detailed description of the figures

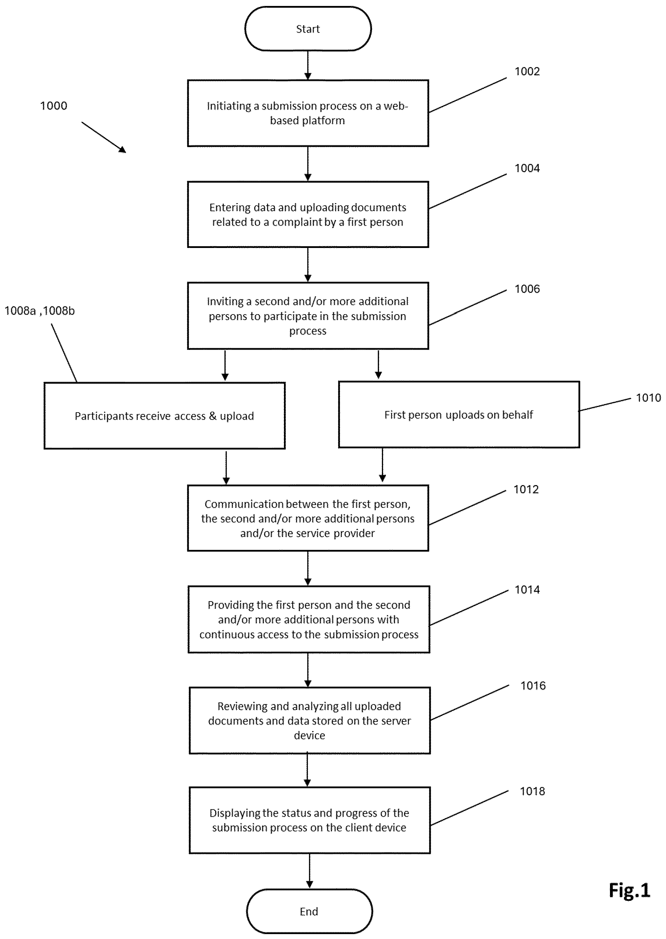

**Fig. 1** shows a flow chart of a preferred embodiment of the proposed method **1000** for managing collaborative submission processes on a web-based platform.

In the first method step **1002,** a submission process may be initiated on the platform, which is preferably provided by a service provider and hosted on a server device **12.** A first person can access the platform via a client device **14,** which is in data communication with the server device **12.**

In the next method step **1004,** the first person may enter data and upload documents related to a complaint via the client device **14.** These data and documents can be transmitted from the client device **14** to the server device **12.**

In the following method step **1006,** the first person may invite a second and/or more additional persons to participate in the submission process. These persons can be selected either based on stored contact information on the client device **14** or through manual data entry on the client device **14.**

In method step **1008a,** the invited persons may receive access to the submission process via an access link or other access information. This access information can be provided either by the client device **14** of the first person or by the server device **12** via IP-based communication. Upon receiving access, the invited persons can proceed to method step **1008b,** in which they may upload documents and data via their respective client devices **14.** These documents and data can be transmitted to the server device **12.**

Alternatively, in method step **1010,** the first person may enter data and upload documents on behalf of the invited persons via the client device **14.** These data and documents can then be transmitted from the client device **14** to the server device **12.**

In method step **1012,** communication may take place between the first person, the invited persons, and/or the service provider. This communication can include information exchange, action requests, or instant messaging. All participating client devices **14** may be interconnected via the server device **12** and/or via a peer-to-peer connection.

In method step **1014,** continuous access to the submission process can be provided to all participating persons via their respective client devices **14.** This access may allow them to finalize their submissions, including uploading additional documents, adding relevant information, sharing data, and electronically signing documents. The transmitted data and documents may be stored on the server device **12.**

In method step **1016,** the uploaded documents and data stored on the server device **12** can be reviewed and analyzed by the service provider. This review process may be performed manually or automatically.

In the final method step **1018,** the status and progress of the submission process may be displayed on the client device **14** of the first person and/or the invited persons. These details can be accessed upon request via the client device **14** through the server device **12.**

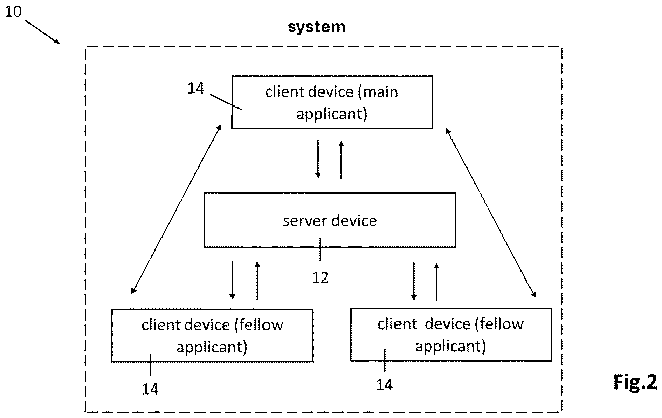

**Fig.** 2 shows an embodiment of a proposed system **10** for managing collaborative submission processes based on a client-server model. The system **10** comprises a server device **12** and multiple client devices **14,** including a first client device **14** assigned to a main applicant or first person and at least one additional client device **14** assigned to a fellow applicant or second or additional person.

The server device **12** may be configured to provide a web-based platform for initiating, managing, and processing submission processes. The server device **12** can store data and uploaded documents received from the first client device **14** and the additional client devices **14.** Additionally, the server device **12** may transmit access information, such as an access link, to the additional client devices **14** upon request from the first client device **14.**

The first client device **14** may initiate a submission process by connecting to the server device **12** and accessing the web-based platform. The first client device **14** can enter data and upload documents related to a complaint, which may then be transmitted to the server device **12.** Furthermore, the first client device **14** may invite additional persons to participate by requesting the server device **12** to generate and transmit an access link. The first client device **14** can also enter data and upload documents on behalf of additional persons.

The additional client devices **14** may access the submission process via the server device **12** using the received access link. These client devices **14** can enter data and upload documents related to the complaint, which may be transmitted to the server device **12.**

Communication between the first client device **14,** the additional client devices **14,** and the service provider may take place via the server device **12** and/or through a peer-to-peer connection. This communication can include exchanging information, handling action requests, and enabling instant messaging.

Both the first client device **14** and the additional client devices **14** may display the status and progress of the submission process as received from the server device **12.**

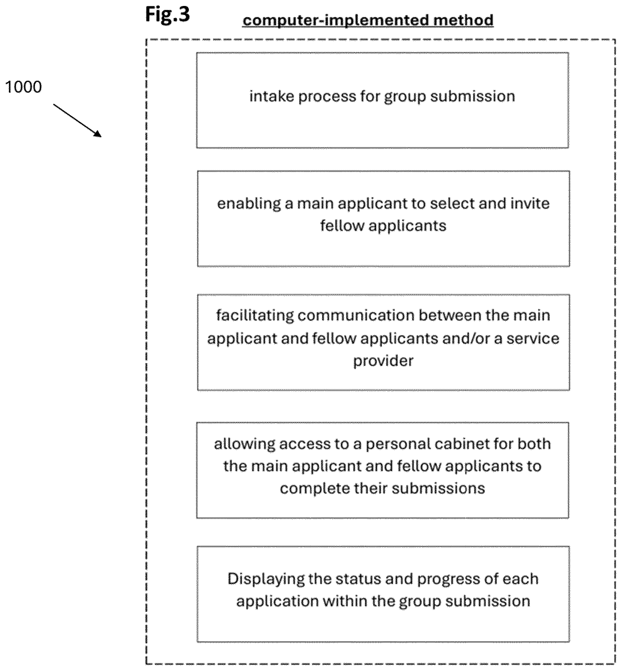

**Fig. 3** shows a chart depicting a preferred embodiment of the proposed computer-implemented method **1000** in an alternative formulation. This particular embodiment is also described in item 1 below.

First, group submissions of consumer complaints may be received through an intake process. Next, a main applicant can select and invite additional applicants to participate in the group submission.

Furthermore, the method may facilitate communication between the main applicant, fellow applicants, and/or a service provider. Both the main applicant and the additional applicants may have access to a personal cabinet, where they can complete their submissions. Additionally, the system may display the status and progress of each application within the group submission.

It is important to emphasize that the steps shown do not have to follow a fixed sequence. Any step in the process can be performed at any time and repeated as necessary.

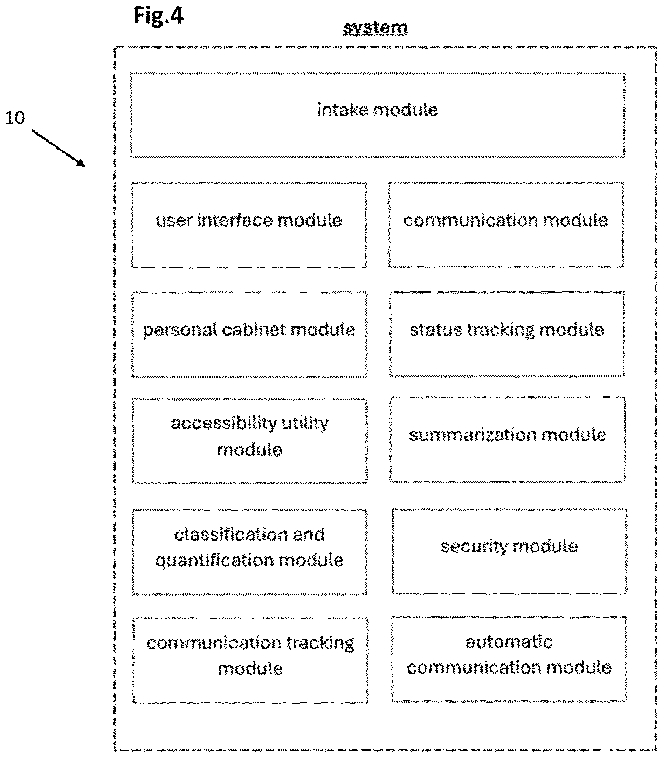

**Fig. 4** shows a schematic representation of a preferred embodiment of the proposed system **10** in an alternative formulation. This particular embodiment is also described in item 25 below.

The system **10** consists of multiple modules, each serving a distinct function. These may include an intake module, a user interface module, a communication module, a personal cabinet module, a status tracking module, an accessibility utility module, a summarization module, a classification and quantification module, a security module, a communication tracking module, and an automatic communication module.

The intake module may be configured to receive and process group submissions of consumer complaints in various categories. The user interface module can allow the main applicant to select and invite fellow applicants to participate in a group submission. It may also enable them to provide necessary documents and information.

The communication module can facilitate interaction between the main applicant, fellow applicants, and/or a service provider. It may support in-funnel information sharing, action requests, instant messaging, and secure communication channels. The personal cabinet module may allow both the main applicant and fellow applicants to access and complete their respective submissions. This can include uploading required documents, adding relevant information, and electronically signing necessary forms.

The status tracking module may display the status and progress of each application within the group submission. The accessibility utility module can enable the main applicant to assume roles such as lead applicant, guardian, or application supervisor. It may also allow the designation of another fellow applicant or an external authorized controller for these roles. Additionally, it preferably facilitates group chats within a secure personal cabinet environment.

The summarization module may extract key factual information from the main applicant's submission and share it with other applicants. It can also anonymize data and automatically suggest fact summaries to fellow applicants who have experienced similar issues. The classification and quantification module may classify and quantify potential outcomes based on the provided information. It can also inform other applicants about the classification of their case.

To ensure data integrity, the security module may validate access and submissions using multiple authentication methods. It can further support the secure and consensual sharing of information while enabling applicants to upload non-public documents securely. The communication tracking module can monitor communication metrics and evaluate performance indicators. Additionally, it may conduct A/B testing to optimize messaging efficiency.

Finally, the automatic communication module may inform fellow applicants about updates and required actions performed by the main applicant and/or other participants. It can also provide a reporting mechanism that allows applicants to flag any suspicious or unauthorized activity.

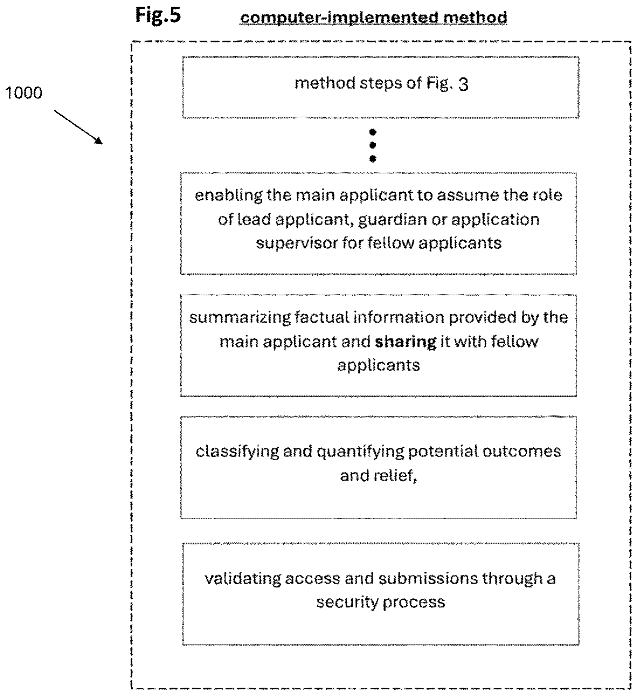

**Fig. 5** shows a chart depicting a further preferred embodiment of the proposed computer-implemented method **1000** in an alternative formulation. This particular embodiment is also described in items 2 - 5 below.

This method **1000** may enable the main applicant to assume the role of lead applicant, guardian, or supervisor for fellow applicants. It can also allow for the designation of another fellow applicant or an external authorized controller to take on these roles. Additionally, it may support the sharing of supervisory roles with multiple co-lead applicants and preferably facilitate secure group and individual chats within a personal cabinet environment.

Furthermore, the method **1000** may include summarizing the factual information provided by the main applicant and sharing it among fellow applicants. It can also anonymize and auto-suggest summaries of facts for applicants who have encountered similar issues.

The method **1000** may further involve classifying and quantifying potential outcomes and relief. It can formulate estimates regarding the time required to achieve results based on the main applicant's information and keep fellow applicants informed of such details.

Moreover, the method **1000** may ensure the validation of access and submissions through a security process. This process can include various validation methods, risk mitigation and analysis, consensual sharing of information and data, as well as the ability to upload and share secured non-public documents and information.

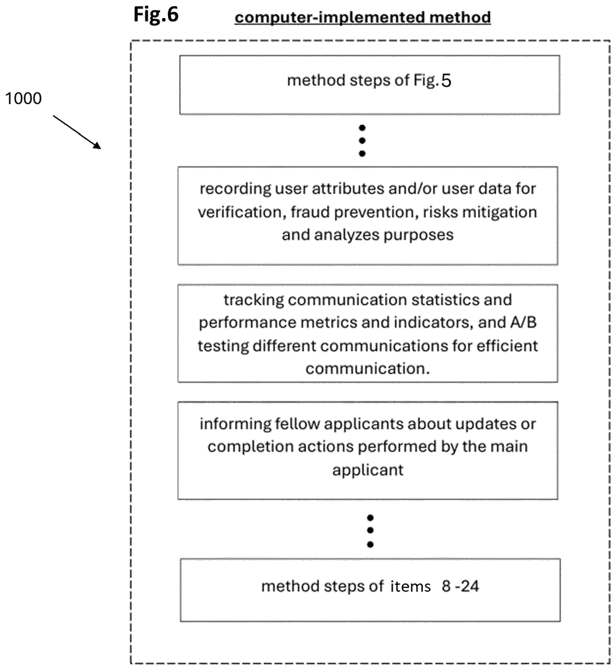

**Fig. 6** shows a chart depicting a further preferred embodiment of the proposed computer-implemented method **1000** in an alternative formulation. This particular embodiment is also described in items 5 - 7 below.

The method **1000** may build on the method steps and features presented in Figures 3 and 5, integrating and extending these previous approaches.

Additionally, the method **1000** may involve recording user attributes and/or data for purposes such as verification, fraud prevention, risk mitigation, and analysis. This can include, but is not limited to, comparing timestamps, data stamps, user IP addresses, and potentially other attributes such as device type and model.

The method **1000** may also encompass tracking communication statistics, performance metrics, and indicators. It can support conducting A/B testing on different communication strategies to optimize efficiency. Furthermore, it may include informing fellow applicants about updates or actions performed by the main applicant.

Moreover, the method **1000** may enable fellow applicants to report any suspicious or unauthorized activity through an automated communication process. This feature can be particularly important for verification, fraud prevention, risk mitigation, and analytical purposes.

The above-mentioned embodiments may also be alternatively described using the following itemized list.
1. A computer-implemented method **1000** for processing group submissions of consumer complaints, claims, other submissions, collectively referred to as "complaints", comprising:
   a. Receiving group submissions of consumer complaints via an intake process;
   b. Enabling a main applicant through a user interface to select and invite fellow applicants for participation in a group submission, and to provide the necessary documents and information for the completion of the group submission;
   c. Facilitating communication between the main applicant and fellow applicants and/or a service provider, including handling in-funnel information and action requests, instant messaging, and utilizing secure communication channels;
   d. Allowing access to a personal cabinet for both the main applicant and fellow applicants to complete their submissions, which includes the uploading of necessary documents, addition of necessary information, information sharing, and e-signing of documents;
   e. Displaying the status and progress of each application within the group submission;
2. The method **1000** according to item 1, further comprising:
   - Enabling the main applicant to assume the role of lead applicant, guardian or application supervisor for fellow applicants, designate another fellow applicant or an external authorized controller for these roles, share the supervisory role with multiple co-lead applicants, and facilitate secure group and individual chats within a personal cabinet environment.
3. The method **1000** according to any of the preceding items, further comprising:
   - Summarizing factual information provided by the main applicant and sharing it with fellow applicants, anonymizing and auto-suggesting summaries of facts to fellow applicants who experienced the same issues.
4. The method **1000** according to any of the preceding items, further comprising:
   - Classifying and quantifying potential outcomes and relief, formulating estimates of time needed to obtain the result based on the information provided by the main applicant, and informing fellow applicants about such information.
5. The method **1000** according to any of the preceding items, further comprising:
   - Validating access and submissions through a security process involving different validation methods, risk mitigation and analysis, consensual sharing of information and data, and the ability to upload and provide secured nonpublic documents and information.
   - Recording user attributes and/or user data for verification, fraud prevention, risks mitigation and analyzes purposes, preferably comparing time, data stamps, user Ips and/or potentially other attributes as for example device type, model.
6. The method **1000** according to any of the preceding items, further comprising:
   - Tracking communication statistics and performance metrics and indicators, and A/B testing different communications for efficient communication.
7. The method **1000** according to any of the preceding items, further comprising:
   - Informing fellow applicants about updates or completion actions performed by the main applicant, and enabling fellow applicants to report any suspicious or unauthorized activity through an automatic communication process for verification, fraud prevention, risks mitigation and analyzes purposes.
8. The method **1000** according to any of the preceding items, further comprising providing a secure and compliant environment within the personal cabinet for the completion of information and documents by the main applicant(s) for him/herself and other fellow applicants, and by fellow applicants for themselves and other fellow applicants, which also allows for concurrent and/or sequential work on applications, including completion actions undertaken by the main applicant and fellow applicant, or by two fellow applicants helping one another.
9. The method **1000** according to any of the preceding items, further includes a feature within the intake process, personal cabinet and communication process to save progress and enable completion at a later time.
10. The method **1000** according to any of the preceding items, further comprising the capability within an accessibility utility process to designate one or multiple co-lead applicants and facilitate group chat in a secure personal cabinet environment.
11. The method **1000** according to item 3, further includes the ability within the summarization process to auto-suggest summaries of facts to fellow applicants who experienced the same issues.
12. The method **1000** according to item 4, further comprising the feature within the classification and quantification process to identify, quantity and classify essential facts to establish:
   - legal elements of the case, and/or
   - claim classification, and /or
   - qualifying elements of potential application, and/or
   - defense or facts that may invalidate the application in whole or in part and/or
   - facts to help quantify proper type of relief and amount of potential recovery.
13. The method **1000** according to item 4, further comprising validating access and submission through email, SMS, messenger, or other means, and enabling consensual sharing of information and data as part of the security process.
14. The method **1000** according to any of the preceding items, further comprising providing secure links to complete incomplete submissions for both the main applicant and fellow applicants, and the ability to preview missing documents or information as part of the automatic communication process.
15. The method **1000** according to any of the preceding items, further comprising automatically checking the value of reimbursement claims and/or replacement value based on estimates of fair market price for specific items or services, thereby relying on auto-suggested information for the valuation of such claims.
16. The method **1000** according to any of the preceding items, further comprising allowing users to leave complaints about concerned organizations, allowing users to leave a detailed review of such organization and request publication on the website and/or conversion into a compelling post for publication on social media channels, with option of auto-suggesting a draft of such complaints for user convenience.
17. The method **1000** according to item 16, further includes the capability to automatically identify and remove and/or anonymize sensitive and/or personally identifiable information from user complaints and/or reviews before publication, with options for moderator review or automatic moderation and/or automatic publication on website, social media, and other channels.
18. The method **1000** according to any of the preceding items, further comprising enabling users to select the type of relief sought, with displaying the probability of such relief being granted based on user selection from auto-suggested options or custom relief requests.
19. The method **1000** according to any of the preceding items, further comprising summarizing and formulating proprietary trust and/or quality scores for specific products and/or services of organizations based on user submissions, complaints, and reviews, enhancing public opinion and decision-making for potential consumers.
20. The method **1000** according to item 16 and 17, further includes the capability to automatically capture organizations' feedback, resolution, offers, or comments in response to user reviews and complaints.
21. The method **1000** according to any of the preceding items, further comprising offering chargeback functionality to consumers, providing an additional layer of financial protection and dispute resolution.
22. The method **1000** according to any of the preceding items, further configured to identify and prioritize handling of complaints from power applicants, such as frequent travelers, business/first class flyers, veterans, platinum/gold members, holders of elite status credit cards, special account holders, large account holders, VIP/premiere/elite clients, and business travelers, to expedite the resolution process and enhance customer loyalty and satisfaction.
23. The method **1000** according to any of the preceding items, further comprising designated access for organizations to the platform for better visibility and control over applications, complaints, and reviews, enabling organizations to convert unpleasant user experiences into satisfactory outcomes and act on applicant feedback in an automatic, semi-automatic, or manual manner, including workflows for rewarding, reimbursing, refunding, or compensating applicants with cash, vouchers, bank payouts, e-wallet funds, e-gift cards, or cryptocurrency, and requesting applicants to revise their complaint or review, execute settlement or release documents.
24. A use of the computer-implemented method **1000** according to any of the preceding items for group submissions of consumer complaints in various categories, including airline claims, travel-related claims, legal-related claims, insurance-related claims, data breach compensation claims, general consumer complaints/claims, telecommunications claims, employment-related claims, discrimination-related claims, medical and pharmaceutical-related claims, banks and financial-related claims, logistics-related claims, education-related claims, and general software-related submissions.
25. A system **10** for efficient processing group submissions of consumer complaints and/or other types of group submissions, collectively referred to as "complaints" , comprising:
   a. An intake module configured to receive and process group submissions of consumer complaints in various categories, including airline claims, travel-related claims, legal-related claims, insurance-related claims, data breach compensation claims, general consumer complaints, telecommunications claims, employment-related claims, discrimination-related claims, medical and pharmaceutical-related claims, banks and financial-related claims, logistics-related claims, education-related claims, and general software-related submissions;
   b. A user interface module configured to allow a main applicant to select and invite fellow applicants to participate in a group submission, and to provide necessary documents and information for completion of the group submission;
   c. A communication module configured to facilitate communication between the main applicant and fellow applicants, including in-funnel information and action requests, instant messaging, and secure channels of communication;
   d. A personal cabinet module configured to allow the initial and/or main applicant and/or any member of the group (fellow applicants) to access and complete their respective submissions and submissions of other members of the group, including uploading necessary documents, adding necessary information, and e-signing necessary documents;
   e. A status tracking module configured to display the status and progress of each application in the group submission;
   f. An accessibility utility module configured to allow the main applicant to assume the role of the lead applicant, and/or guardian or application supervisor for fellow applicants, designate another fellow applicant or external authorized controller as the guardian or application supervisor, share the lead applicant, and/or role of guardian or application supervisor with multiple co-lead applicants, and facilitate group chat within a secure personal cabinet environment;
   g. A summarization module configured to summarize factual information provided by the main applicant and share it with other fellow applicants, as well as anonymize and auto-suggest summaries of facts to other fellow applicants who experienced the same issues;
   h. A classification and quantification module configured to classify and quantify potential outcomes and relief based on the information provided by the main applicant, and inform other fellow applicants about the classification of the case;
   i. A security module configured to validate access and submission through a combination of different validation methods, consensual sharing of information and data, and the ability to upload secured nonpublic documents and information;
   j. A communication tracking module configured to track communication statistics and performance indicators, and A/B test different communications to achieve efficient communication;
   k. An automatic communication module configured to inform fellow applicants about updates and/or completion actions performed by the main applicant and/or other applicants, and allow fellow applicants to report any suspicious or unauthorized activity.

### Reference numeral list

- **10**: System
- **12**: Server device
- **14**: Client device
- **1000**: Computer-implemented method
- **1002**: Initiating a submission process (method step)
- **1004**: Entering data and uploading documents (method step)
- **1006**: Inviting additional applicants (method step)
- **1008a**: Providing access link to invited applicants (method step)
- **1008b**: Uploading documents and data by invited applicants (method step)
- **1010**: Entering data and uploading documents on behalf of invited applicants (method step)
- **1012**: Communication between applicants and service provider (method step)
- **1014**: Providing continuous access to submission process (method step)
- **1016**: Reviewing and analyzing documents and data (method step)
- **1018**: Displaying status and progress of submission process (method step)

## Claims

1. A computer-implemented method (1000) for managing collaborative submission processes, in particular group submissions, of consumer complaints, claims, other submissions, collectively referred to as "complaints", comprising:
a. Initiating (1002) a submission process on a web-based platform provided by a service provider and hosted on a server device (12), wherein a first person assigned to a group accesses the web-based platform via a client device (14), which is in data communication with the server device (12); and
b. Entering (1004) data and uploading documents related to a complaint by the first person via the client device (14) and transmitting the entered data and uploaded documents to the server device (12); and
c. Inviting (1006) a second and/or more additional persons assigned to the group to participate in the submission process, wherein these persons are selected by the first person either based on stored contact information on the client device (14) or through manual data entry on the client device (14),
c1. wherein the second and/or more additional persons receive (1008a) an access link or other access information to the server device (12) and the submission process, provided either by the first person's client device (14) and/or by the server device (12) via IP-based communication, enabling them to connect via their client devices (14) to the server device (12) and upload (1008b) necessary documents and data to complete the submission process; or alternatively,
c2. wherein the first person enters (1010) data and uploads documents on behalf of the second and/or more additional persons via the first person's client device (14) and transmitting the entered data and uploaded documents to the server device (12);
d. Communication (1012) between the first person, the second and/or more additional persons and/or the service provider, including handling in-funnel information and action requests, instant messaging, wherein all client devices (14) are interconnected via the server device (12) and/or via Peer-to-Peer connection;
e. Providing (1014) the first person and the second and/or more additional persons with continuous access to the submission process until completion, allowing them to finalize their submissions, including uploading necessary documents, adding relevant information, sharing data, and electronically signing documents;
f. Reviewing (1016) and analyzing all uploaded documents and data stored on the server device (12) by the service provider, either manually or automatically, and processing them accordingly;
g. Displaying (1018) the status and progress of the submission process on the client device of the first person and/or any invited persons upon request via their client device (14) through the server device (12).

2. The method (1000) according to claim 1, further comprising:
- Assigning the first person the role of a lead applicant, guardian, or application supervisor for the submission process, wherein the role assignment is managed via the web-based platform hosted on the server device (12); and/or
- Allowing the first person to designate another invited person or an external authorized controller as a lead applicant, guardian, or application supervisor via role selection functionalities provided by the server device (12).

3. The method (1000) according to any of the preceding claims, further comprising:
- Summarizing factual information provided by the first person and sharing it with the second and/or more additional persons via the server device (12); and/or
- Anonymizing and automatically suggesting summaries of relevant facts to individuals who have experienced similar issues via the server device (12).

4. The method (1000) according to any of the preceding claims, further comprising:
- Processing the data and documents submitted by the first person and/or invited persons on the server device (12) to classify and quantify potential outcomes and forms of relief using predefined classification rules and data analysis algorithms;
- Automatically estimating the time required to obtain a result based on the provided data, historical records stored on the server device (12), and predefined estimation models.

5. The method (1000) according to claim 4, further comprising:
- Identifying, quantifying, and classifying essential facts within the classification and quantification process to determine:
• legal elements relevant to the complaint; and/or
• claim classification based on predefined categorization rules; and/or
• qualifying elements required for potential application eligibility; and/or
• defense arguments or factors that may invalidate the application in whole or in part;
and/or
• facts supporting the quantification of appropriate relief types and the estimation of potential recovery amounts.

6. The method (1000) according to any of the preceding claims, further comprising:
a. Validating access and submissions by implementing a security process that includes multiple validation methods, risk mitigation measures, analytical evaluation, and the consensual sharing of information and data, wherein the first person and the second and/or more additional persons are enabled to upload and provide secured, nonpublic documents and information; and/or
b. Recording attributes of the first person and the second and/or more additional persons for verification, fraud prevention, risk mitigation, and analytical evaluation, wherein recorded attributes preferably include timestamps, user IP addresses, and additional identifying characteristics such as device type and model.

7. The method (1000) according to any of the preceding claims, further comprising:
- Automatically identifying and removing and/or anonymizing sensitive and/or personally identifiable information from complaints and/or reviews before publication, wherein the processing is performed on the server device (12); and/or
- Enabling moderator review, automatic moderation, and/or direct automated publication via the server device (12) on websites, social media platforms, and other designated channels.

8. The method (1000) according to any of the preceding claims, further comprising:
- Identifying and prioritizing the handling of complaints submitted by high-priority individuals, in particular the first person, second person, or any additional person assigned to the group, including but not limited to persons with elevated service status, frequent users, premium service members, or designated priority clients;
- Processing prioritization on the web-based platform to optimize computational resources, expedite resolution and enhance user experience, customer loyalty, and satisfaction.

9. A system (10) for managing collaborative submission processes, in particular group submissions, of consumer complaints, claims, or other submissions, collectively referred to as "complaints", the system(10) comprising a server device (12) hosted by a service provider, a first client device (14) assigned to a first person of a group, a second client device (14) assigned to a second person of the group and/or an additional client device (14) assigned to an additional person of the group, wherein:
(i) the server device (12) is configured to:
a. Provide a web-based platform for initiating, managing, and processing submission processes
b. Store data and uploaded documents received from the first client device (14) and/or the second or additional client devices (14);
c. Transmit access information, including an access link, to the second and/or additional persons upon request from the first client device (14);
d. Facilitate communication between the first client device (14), the second client device (14) and/or additional client devices (14), and the service provider, including handling in-funnel information, action requests, and instant messaging;
e. Provide continuous access to the submission process for all involved persons until completion;
f. Enable the service provider to review and process submitted data and documents, either manually or automatically;
(ii) the first client device (14) is configured to:
a. Initiate a submission process by connecting to the server device (12) and accessing the web-based platform;
b. Enter data and upload documents related to the complaint and transmit them to the server device (12);
c. Invite the second and/or additional client device (14) to participate in the submission process by sending a request to the server device (12) to generate and transmit an access link;
d. Optionally enter data and upload documents on behalf of the second and/or additional persons and transmit them to the server device (12);
e. Communicate with the second and/or additional client device (14) via the server device (12) and/or via Peer-to-Peer connection;
f. Display the status and progress of the submission process as received from the server device (12)
(iii) the second client device (14) and/or additional client device (14) is configured to:
a. Access the submission process via the server device (12) using the received access link;
b. Enter data and upload documents related to the complaint and transmit them to the server device (12);
c. Communicate with the first client device (14) and/or the service provider via the server device (12) and/or via Peer-to-Peer connection;
d. Display the status and progress of the submission process as received from the server device (12).

10. The system (10) according to claim 9, wherein the server device (12) is configured to:
- Assign the first person the role of a lead applicant, guardian, or application supervisor for the submission process, wherein the role assignment is managed via the web-based platform hosted on the server device (12); and/or
- Allow the first person to designate another invited person or an external authorized controller as a lead applicant, guardian, or application supervisor via role selection functionalities provided by the server device (12).

11. The system (10) according to any of the preceding claims 9 - 10, wherein the server device (12) is further configured to:
- Summarize factual information provided by the first person and share it with the second and/or more additional persons via the server device (12);
- Anonymize and automatically suggest summaries of relevant facts to individuals who have experienced similar issues.

12. The system (10) according to any of the preceding claims 9 - 11, wherein the server device (12) is further configured to:
- Process the data and documents submitted by the first person and/or invited persons to classify and quantify potential outcomes and forms of relief using predefined classification rules and data analysis algorithms;
- Automatically estimate the time required to obtain a result based on the provided data, historical records stored on the server device (12), and predefined estimation models.

13. The system (10) according to claim 12, wherein the server device (12) is further configured to:
- Identify, quantify, and classify essential facts within the classification and quantification process to determine:
∘ legal elements relevant to the complaint; and/or
∘ claim classification based on predefined categorization rules; and/or
∘ qualifying elements required for potential application eligibility; and/or
∘ defense arguments or factors that may invalidate the application in whole or in part; and/or
∘ facts supporting the quantification of appropriate relief types and the estimation of potential recovery amounts.

14. The system (10) according to any of the preceding claims 9 - 13, wherein the server device (12) is further configured to:
• Validate access and submissions by implementing a security process that includes multiple validation methods, risk mitigation measures, analytical evaluation, and the consensual sharing of information and data, wherein the first person and the second and/or more additional persons are enabled to upload and provide secured, nonpublic documents and information; and/or
• Record attributes of the first person and the second and/or more additional persons for verification, fraud prevention, risk mitigation, and analytical evaluation, wherein recorded attributes preferably include timestamps, user IP addresses, and additional identifying characteristics such as device type and model.

15. A computer program product comprising instructions which, when executed on a server device (12) hosted by a service provider, cause the server device (12) to perform a method for managing collaborative submission processes, in particular group submissions, of consumer complaints, claims, or other submissions, collectively referred to as "complaints", the method comprising:
a) Providing a web-based platform for initiating, managing, and processing submission processes;
b) Storing data and uploaded documents received from a first client device (14) and/or a second or additional client device (14);
c) Transmitting access information, including an access link, to the second and/or additional persons upon request from the first client device (14);
d) Facilitating communication between the first client device (14), the second client device (14) and/or additional client devices (14), and the service provider, including handling in-funnel information, action requests, and instant messaging;
e) Providing continuous access to the submission process for all involved persons until completion;
f) Enabling the service provider to review and process submitted data and documents, either manually or automatically.
